# EUROPEAN PATENT APPLICATION

(11) **EP 1 676 806 A1**
(43) Date of publication of application: **05.07.2006**
(21) Application number: 04818978.1
(22) Date of filing: 19.11.2004
(51) Int. Cl.: B66B 7/12, G01N 27/83

(54) **WIRE ROPE FLAW DETECTOR FOR ELEVATOR**

(30) Priority: 21.11.2003 JP 2003392788
(71) Applicant: Toshiba Elevator Kabushiki Kaisha, Shinagawa-ku, Tokyo 141-0001 (JP)
(72) Inventor: OSADA, A., c/o Fuchu Complex, K.K. Toshiba, Fuchu-shi, Tokyo 183-0043 (JP); OKAMOTO, M., c/o Fuchu Complex, K.K. Toshiba, Fuchu-shi, Tokyo 183-0043 (JP)
(74) Representative: Kramer - Barske - Schmidtchen
(86) International application number: PCT/JP2004/017256
(87) International publication number: WO 2005/049471

(57) **Abstract**

A flaw detection apparatus for a wire rope of an elevator according to the present invention, which is intended for a wire rope having a nominal diameter of 4 mm to 8 mm, includes a plurality of unit probes 9. Each of the unit probes 9 has a first and a second magnetic poles 10a and 10b of different polarity, and a magnetic sensor 11 of a U-shape disposed between the first magnetic pole 10a and the second magnetic pole 10b. A bottom radius of the magnetic sensor 11 is in a range of 2 mm to 5mm. A difference between the bottom radius of the magnetic sensor 11 and a half of the nominal diameter of a wire rope 1 is equal to or less than 1.5 mm.

## Description

### BACKGROUND OF THE INVENTION

### Field of the Invention

The present invention relates to a flaw detection apparatus for a wire rope of an elevator, which is used for the maintenance of a wire rope suspending an elevator car of an elevator.

### Background Art

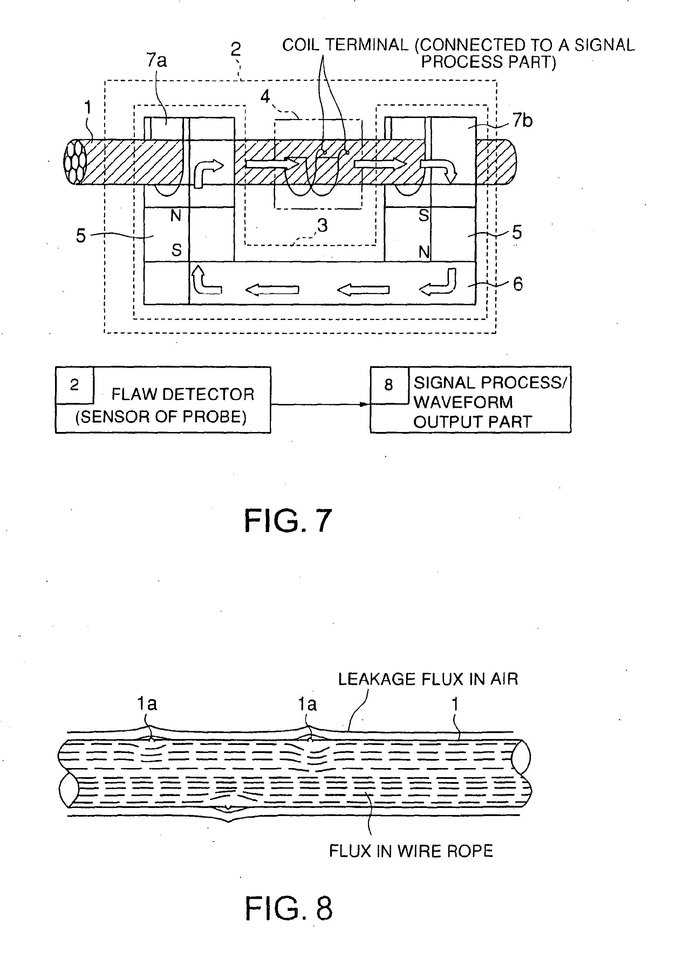

A wire rope supporting an elevator car of an elevator must be maintained in accordance with regulations and repaired as needed. In general, breaking and abrasion of wires is checked for by visually observing the wires to determine a remaining strength of the wire rope. However, such visual observation is not easy because of the thin wires. Thus, a magnetic flaw detection apparatus shown in Fig. 7 has conventionally been used for more rapidly detecting a flaw in wires, such as breaking, abrasion, kinks, and so on.

In Fig. 7, the reference numbers 1 and 2 show a rope to be measured and a flaw detector (hereinafter referred to as a "probe") of the magnetic flaw detection apparatus, respectively. The probe 2 includes a magnetic part 3 for exciting the rope 1 to be measured, and a sensor part 4 for detecting a flux change observed on a surface of the rope 1.

In Fig. 7, the magnetic part 3 has a magnet 5 formed of a permanent magnet, a yoke 6 of a rectangular cross-section, and two magnetic poles 7a and 7b each having a U-shaped groove portion. A magnetic field is generated in the yoke 6 in a direction shown in Fig. 7, and a magnetic channel is formed inside the measured rope 1 through the magnetic poles 7a and 7b.

When the measured rope 1 has a flaw portion 1a such as breaking or abrasion, a leakage flux changes the magnetic field in the air at the flaw portion 1a (Fig. 8 is a conceptual view thereof). After the U-shaped sensor part 4 passes through the changed magnetic field, an electromotive force (signal) is generated in the sensor part 4, and then the signal is output to a process/display part 8.

A maintenance operator can specify the most deteriorated portion in the rope, based on a displayed signal waveform, and determine a strength of the deteriorated portion. Such a flaw detection apparatus can facilitate a flaw detection operation, which results in a significant reduction of a time required for the maintenance operation of the rope.

Although the sensor part 4 is made of a coil in the example shown in Fig. 7, galvanomagnetic-effect devices (Hall-effect devices) may be alternatively used therefor (not shown). When the coil is used, a relative velocity is needed between the measured rope 1 and the probe 2, and a variation of the velocity has an impact on a flaw-detection sensibility. On the other hand, when the Hall-effect devices serving as detecting elements are used, an output in proportion to a flux density can be obtained, and a flaw-detection sensibility independent from a relative velocity can be provided.

In a medium-sized building or a residence, there has been a demand for an elevator that occupies as little space as possible, with a view to utilizing land and space in the most effective manner. Thus, a greater number of compact machineroom-less elevators have been installed recently. In addition, because of greater environmental consciousness, there is increasing demand for smaller and lighter elevator equipments in order to reduce the environmental burden.

Under these circumstances, a wire rope of a diameter smaller than that of a conventional wire rope is used in an elevator, which allows a size reduction of a driving sheave as well as a size reduction of an electric motor by reducing a torque required for a hoist. Therefore, space and energy necessary for the whole structure can be effectively saved.

Herein, the wire rope of a smaller diameter means a wire rope having a nominal diameter of 4 mm to 8 mm. The wire rope of such size is formed of wires each having a diameter of about 0.3 mm to 0.7 mm. Thus, breaking of the wire can be observed with the naked eye. However, the wire rope of a smaller diameter entails an increased number of wires each having a thinner diameter, and a narrower distance between the wire ropes than the conventional one. As a result, a longer time is required for a maintenance operation, especially for a flaw detection operation and a strength determination operation.

In the above-described flaw detection apparatus utilizing a leakage flux, the leakage flux at a flaw portion is generally reduced because of the thinner wires, which leads to a deterioration of a flaw detection sensibility of the leakage flux. Moreover, when there is a ferromagnetic body such as another rope near the measured rope, the ferromagnetic body is magnetized, so that the magnetized ferromagnetic body influences the magnetic sensors censoring the measured rope to generate noise signals other than those showing a flaw. Although these inconveniences may largely be dependent on positions and sizes of the rope and the magnetic sensors, such disadvantages are inconsistent with the desired aspects of the elevator in terms of an achievement of space-saving elevator equipments and an improvement of a flaw detection performance. Accordingly, no concrete idea has been proposed heretofore, with respect to a magnetic flaw detection apparatus which can be suitably used in an elevator having a wire rope of a smaller diameter so as to save space.

### SUMMARY OF THE INVENTION

The present invention is made in view of the above problems. An object of the present invention is to provide a flaw detection apparatus for a wire rope of an elevator, that can provide an enhanced maintenance workability when used in a space- and energy-saving elevator having a wire rope of a smaller diameter.

The present invention is flaw detection apparatus for a wire rope of an elevator for detecting a flaw portion of a wire rope of an elevator having a nominal diameter of 4mm to 8mm, comprising: a plurality of flaw detectors disposed near the wire rope; wherein each of the flaw detectors has a first and a second magnetic poles of different polarity, and a magnetic sensor of a U-shape disposed between the first and second magnetic poles, each of the U-shaped magnetic sensors has a bottom radius in the range of 2mm to 5mm, a difference between the bottom radius of the magnetic sensor and a half of the nominal diameter of the wire rope being equal to or less than 1.5mm, and a distance between sidewalls of the magnetic sensors of the adjacent flaw detectors in a plan view is equal to or more than 2 mm.

In the flaw detection apparatus for a wire rope of an elevator according to the present invention, the adjacent flaw detectors are staggered relative to a longitudinal direction of the wire rope.

In the flaw detection apparatus for a wire rope of an elevator according to the present invention, the flaw detection apparatus further comprises a filter for filtering to eliminate noises other than signals showing a flaw of the wire rope from signals that are output from the magnetic sensors of the plurality of flaw detectors, wherein after filtering the noises, all of the rest signals are summed up.

In the flaw detection apparatus for a wire rope of an elevator according to the present invention, the flaw detection apparatus further comprises means for eliminating signals under a threshold value from signals that are output from the magnetic sensors of the plurality of flaw detectors, wherein after deleting the signals under the threshold value, all the rest signals are summed up.

In the flaw detection apparatus for a wire rope of an elevator according to the present invention, the flaw detection apparatus further comprises securing members for holding and securing the respective flaw detectors on predetermined positions of an elevator shaft or a machineroom.

In the flaw detection apparatus for a wire rope of an elevator according to the present invention, the securing members for holding the flaw detectors are disposed near a hoist.

In the flaw detection apparatus for a wire rope of an elevator according to the present invention, the securing members hold the flaw detectors at positions where a side surface of the wire rope which is in contact with a groove of a driving sheave of the hoist and bottom surfaces of the magnetic sensors of the flaw detectors are opposed to each other.

In the flaw detection apparatus for a wire rope of an elevator according to the present invention, the flaw detection apparatus further comprises securing members for holding and securing the flaw detectors on an elevator car.

In the flaw detection apparatus for a wire rope of an elevator according to the present invention, the flaw detection apparatus comprises means for converting analogue signals, that are output from the magnetic sensors of the plurality of flaw detectors, to digital signals and storing the digital signals.

In the flaw detection apparatus for a wire rope of an elevator according to the present invention, the flaw detection apparatus further comprises a device for displaying a sum of signals that are output from the magnetic sensors of the plurality of flaw detectors.

In the flaw detection apparatus for a wire rope of an elevator according to the present invention, each of the U-shaped magnetic sensors covers at least a semi-circumference or more of the wire rope.

According to the present invention, in an elevator having a wire rope of a small diameter having a nominal diameter of 4 mm to 8 mm, a flaw of the wire rope can be detected in a highly reliable manner with a minimum space. A time required for detecting a flaw can be drastically reduced in an elevator having an increased number of wire ropes. Accordingly, a time period when the elevator is stopped for a maintenance can be shortened, which in turn elongates a time period when the elevator is in service. In addition, especially in a machineroom-less elevator, the flaw detection apparatus according to the present invention makes it possible for an operator to gather signals outside an elevator shaft whereby an improved safety is provided.

### BRIEF DESCRIPTION OF THE DRAWINGS

Fig. 1 is a general perspective view showing a flaw detection apparatus for a wire rope of an elevator according to the present invention;
Fig. 2 is a side view showing a unit probe of a flaw detection apparatus for a wire rope of an elevator;
Fig. 3(A) to 3(C) are views showing a magnetic sensor;
Fig. 4(A) and (B) are illustrational views showing a signal flaw of the flaw detection apparatus for a wire rope of an elevator according to the present invention;
Fig. 5 is a general view showing a manner of holding the magnetic flaw detection apparatus according to the present invention in the elevator shaft;
Fig. 6 is a general view showing another manner of holding the magnetic flaw detection apparatus according to the present invention in an elevator shaft;
Fig. 7 is a view showing a conventional magnetic flaw detection apparatus used in an elevator; and
Fig. 8 is a conceptual view showing a leakage flux at a flaw portion in a rope.

### DETAILED DESCRIPTION OF THE INVENTION

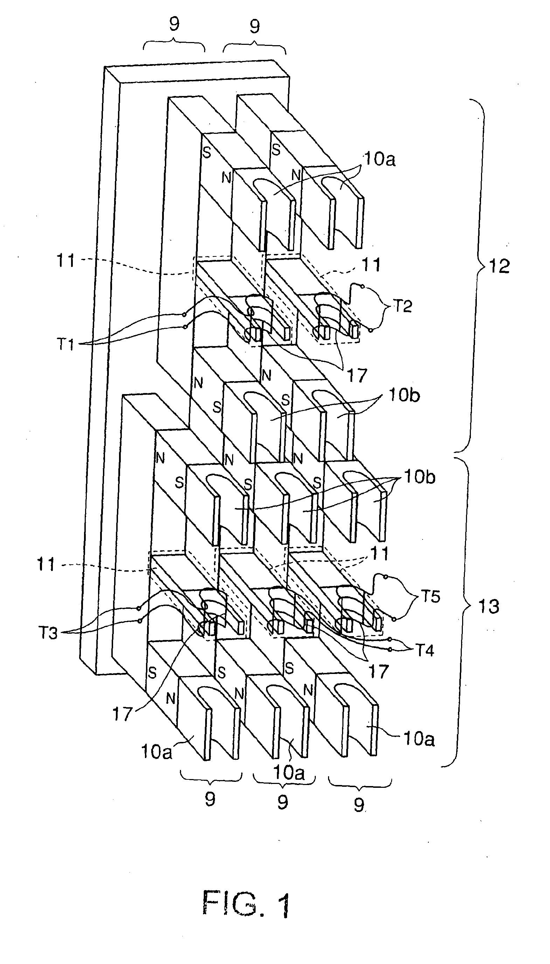

An embodiment of the present invention will be described below with reference to the drawings. Figs. 1 to 6 are views showing an embodiment of the flaw detection apparatus for a wire rope of an elevator according to the present invention.

The flaw detection apparatus for a wire rope of an elevator according to the present invention can be applied to an elevator using a wire rope of a smaller diameter so as to save space and energy. A nominal diameter of the rope is in a range of 4 mm to 8 mm.

As shown in Figs. 1 to 3, the flaw detection apparatus for a wire rope of an elevator includes a plurality of flaw detectors (unit probes) 9. Each of the flaw detectors (unit probes) 9 has a first and a second magnetic poles 10a and 10b of different polarity, and a magnetic sensor 11 of a U-shape disposed between the first magnetic pole 10a and the second magnetic pole 10b. The first magnetic pole 10a is a north pole, while the second magnetic pole 10b is a south pole.

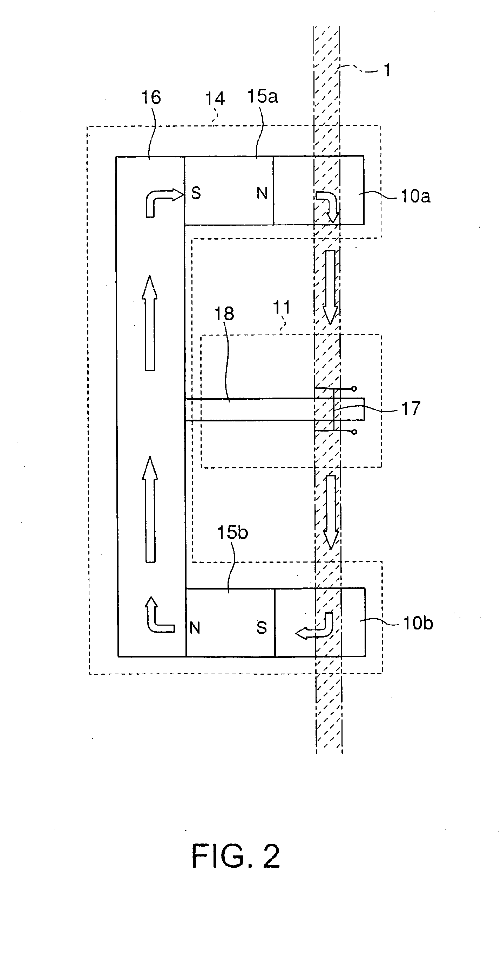

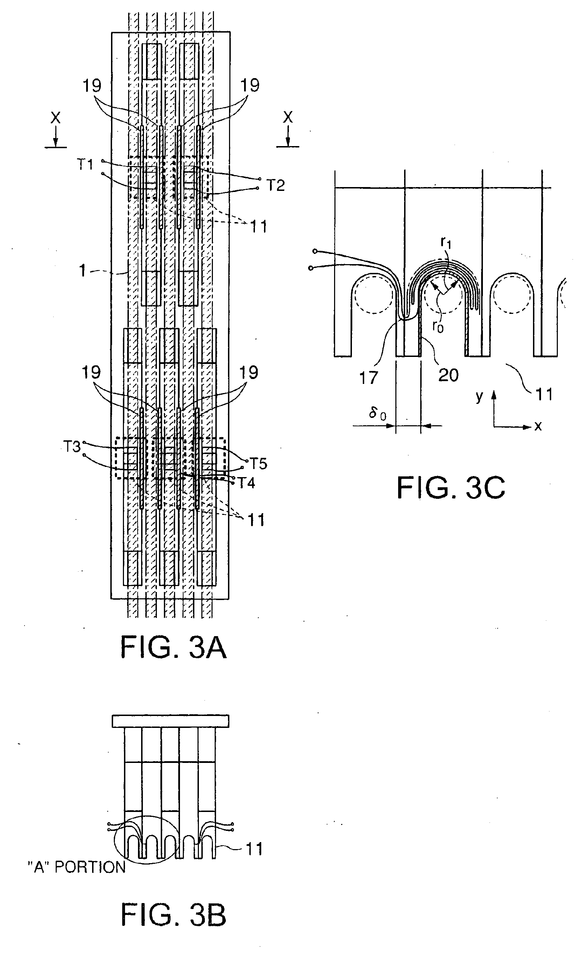

As shown in Figs. 2 and 3(a) - 3(c), a wire rope 1 is measured when the wire rope 1 is fitted in the first and second magnetic poles 10a and 10 and the magnetic sensor 11 of each of the unit probes 9. During a maintenance operation, the measured wire rope 1 is in a tensioned condition. Thus, if the wire rope 1 changes the position to fit with a structure of the unit probe 9, such a changing operation may be time-consuming, and may overload the wire rope 1. By using the small-sized unit probe 9 according to the present invention, a space-saving rope layout can be realized in an elevator. The U-shaped magnetic sensor 11 covers at least a semi-circumference or more of the wire rope 1.

In the flaw detection apparatus of a wire rope of an elevator shown in Fig. 1, the two unit probes 9 are arranged in parallel in an upper portion 12, while the three unit probes 9 are arranged in parallel in a lower portion 13. That is, the five unit probes 9 are staggered relative to a longitudinal direction of the wire rope 1, so that a flaw detection can be simultaneously carried out for the five wire ropes 1.

Each of the unit probes 9 has a magnetic part 14 (see Fig. 2) for exciting the wire rope 1, and the magnetic sensor 11 for detecting a leakage flux (a leakage magnetic flux). Fig. 2 shows a side view of the unit probe 9. In Fig. 2, the reference numbers 15a and 15b indicate permanent magnets each having a polarity in a direction shown in Fig. 2. The magnetic poles 10a and 10b are formed of a ferromagnetic material, and are adjacent to the permanent magnets 15a and 15b. Each of the magnetic poles 10a and 10b has a U-shaped groove in which the measured wire rope 1 is fitted. The reference number 16 indicates a yoke formed of a ferromagnetic material for forming a magnetic channel.

The magnetic part 14, which has the permanent magnets 15a and 15b, the magnetic poles 10a and 10b, and the yoke 16, forms a magnetic channel including the measured wire rope 1 in a direction shown in Fig. 2.

The magnetic sensor 11 has a coil 17, and a base part 18 formed of a nonmagnetic material for holding the coil 17 near a side surface of the measured rope 1. The reference number 19 in Fig. 3(a) indicates a magnetic shielding plate disposed on the magnetic sensor 11 for shielding noises generated by a leakage flux (a leakage magnetic flux) of the wire rope 1 (the magnetic shielding plate 19 is omitted in Fig. 1 for simplicity).

Figs. 3(a) to 3(c) show the magnetic sensor 11 whose position and dimension have a great impact on a flaw detection for the plurality of wire ropes 1. Fig. 3(a) shows the magnetic sensor 11, Fig. 3(b) is a cross-sectional view taken along the X-X line shown in Fig. 3(a), and Fig. 3(c) is an enlargement view of the "A" portion shown in Fig. 3(b).

The inventors of the present invention tested a flaw detection for the wire ropes 1 of an elevator each having a nominal diameter of 4 mm to 8mm. The inventors found that a desired flaw detection sensibility could be obtained with a bottom radius r₁ of the U-shaped magnetic sensor 11 being in a range of 2 mm to 5 mm, a difference between the bottom radius r₁ of the U-shaped magnetic sensor 11 and a half of the nominal diameter (r₀) of each wire rope 1 being equal to or less than 1.5 mm, and the radius r₁ of magnetic sensor 11 being greater than the radius ro of the wire rope 1.

As shown in Figs. 3(a) to 3(c), a sliding member 20 formed of a nonmagnetic material is interposed between the magnetic sensor 11 and the measured wire rope 1 for practical use. In light of the flaw detection sensibility, it is desirable to interpose such a sliding member 20 between the magnetic sensor 11 and the measured wire rope 1 which have the above positions and dimensions.

When the dimensions of the magnetic sensor 11 and the measured wire rope 1 are deviated from the range defined as above, that is, when a difference between the bottom radius r₁ of the U-shaped magnetic sensor 11 and the radius r₀ of the wire rope 1 is more than 1.5 mm, the flaw detection sensibility is lowered, as well as a flaw detection performance is remarkably deteriorated because noises are generated by a displacement of the measured wire rope 1 with respect to the magnetic sensor 11 in the x-y directions shown in Fig. 3(c). A distance δ₀ between sidewalls of the adjacent magnetic sensors 11 in plan view is set equal to or more than 2 mm including the sliding member 20, and the unit probes 9 are longitudinally staggered. The magnetic poles 10a and 10b of each of the unit probes 9 are positioned as shown in Fig. 1. Consequently, noises caused by the leakage flux (leakage magnetic flux) between the adjacent wire ropes 1 can be reduced to a negligible degree for a flaw detection.

As described above, the flaw detection apparatus for a wire rope of an elevator according to the present invention, which has the small-sized unit probes 9 capable of detecting a flaw in a highly reliable manner, is adapted to the five wire ropes 1. However, the above features and effects have no relation to the number of ropes.

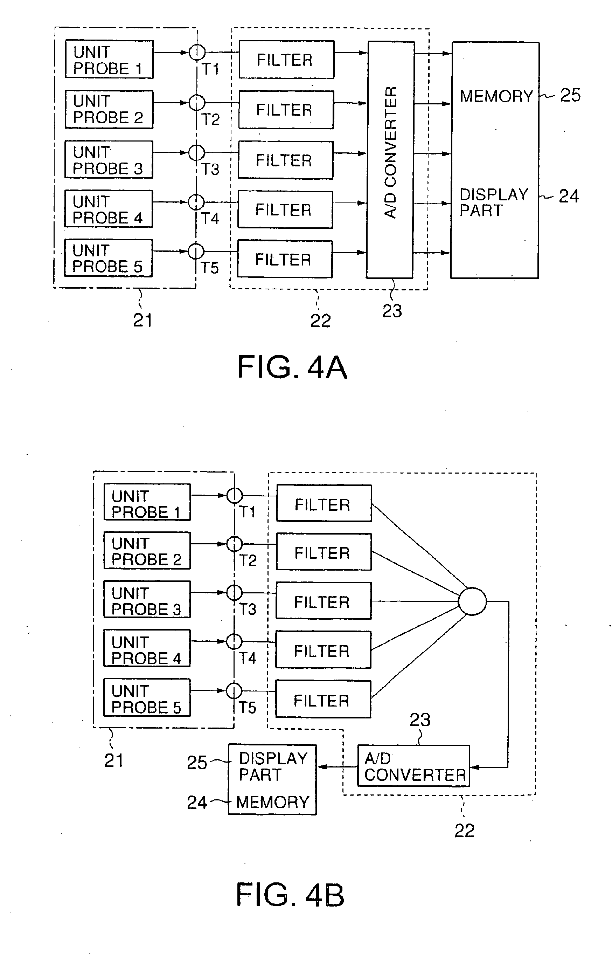

Flows of flaw detection signals of the flaw detection apparatus for a wire rope of an elevator according to the present invention will be described below with reference to Figs. 4(a) and 4(b). Fig. 4(a) shows one of the features of a signal process including a signal display of the flaw detection apparatus of the present invention. In Fig. 4(a), the reference number 21 depicts a probe part including the plurality of unit probes 9 according to the present invention.

Signals generated in the magnetic sensor 11 of each of the unit probes 9 are transmitted to a signal process part 22 through terminals T1 to T5 of the magnetic sensor 11. After the signals are amplified in the signal process part 22 (an amplifier is not shown), the signals are subjected to a signal process such as filtering if necessary. Then, the signals are digitalized by an A/D converter 23. The digitalized signals can be easily stored in a memory 24. In addition, the digitalization of the signals can reduce a deterioration in transmission and memorization of the signals which are carried out downstream the signal process part 22, and can allow a use of a prevailing apparatus such as a personal computer as signal-display means.

In Fig. 4(a), the signals from the unit probes 9 are all transmitted to one display part 25, e.g., a personal computer, and are then simultaneously displayed on a screen. Since all of the wire ropes 1 used in an elevator are fitted in the respective unit probes 9, a flaw detection for all of the ropes can be carried out by only one scanning. Further, since the signals are displayed on a screen all together, a time required for a flaw detection can be largely shortened.

In an elevator using the wire ropes 1 of a smaller diameter, the number of ropes are increased. However, by storing and displaying a sum of the signals output from the respective unit probes 9, circuits are simplified to thereby reduce a cost.

The reason why the signals can be summed up is as follows: This is because the wire rope 1 of an elevator is apt to be particularly damaged at portions where the wire rope 1 passes round a hoist when an elevator car stops at certain floors. By displaying a sum of the signals, the signals to be observed are noticeable whereby a flaw portion can be easily grasped. It may be considered that noises included in the signals are also summed up, which makes unclear the signals showing a flaw. Thus, in order to avoid the unclear signals, a process shown in Fig. 4(b) such as filtering or eliminating signals of negligible low levels can be carried out before summing up the signals.

As above, the flows of the signals have been described with reference to Figs. 4(a) and 4(b). Although Figs. 4(a) and 4(b) show the memory 24 for storing signals which is integral with the display part 25 for displaying signals, the memory 24 can be integrally formed with the signal process part 22, and disposed directly downstream the A/D converter 23.

In Figs. 4(a) and 4(b), the flows of signals are shown by arrows between the equipments. However, it is not necessary to connect the equipments by wires. For example, a detachable nonvolatile memory may be used as the memory 24 disposed directly downstream the A/D converter 23. In this case, after signals are gathered, the memory 24 can be detached from the signal process part 22, and then connected to the display part 25 which is thus separated from the signal process part 22. As a result, a part required for a flaw detection operation can be made compact.

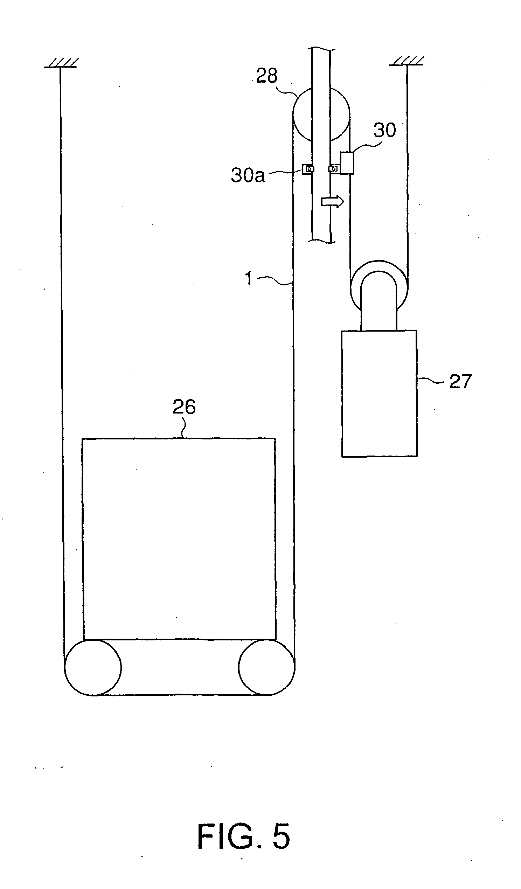

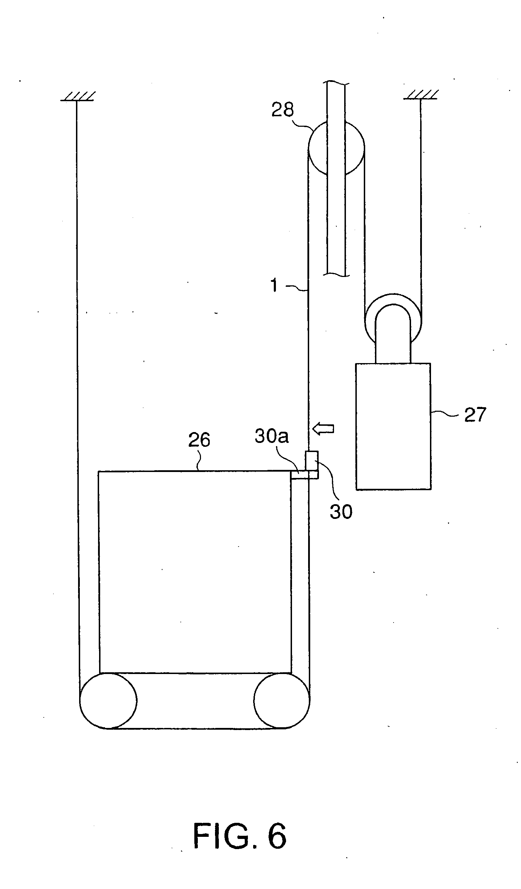

The way to install the flaw detection apparatus for a wire rope of an elevator according to the present invention will be described below with reference to Figs. 5 and 6. Figs. 5 and 6 show an example of a machineroom-less elevator using a wire rope of a small diameter.

In Fig. 5, the reference number 26 depicts an elevator car, 27 depicts a counterweight, 28 depicts a hoist secured in an elevator shaft, e.g., a top thereof, and 30 depicts at least a probe part of the flaw detection apparatus.

The probe part 30 having the plurality of unit probes 9 is positioned and secured on the measured rope 1 by securing means 30a such that a bottom of the U-shaped magnetic sensor 11 is tightly in contact with the measured rope 1 in a direction of the arrow shown in Fig. 5. In other words, the probe part 30 is secured near the hoist 28 by the securing means 30a such that a side surface of the measured rope 1 which is in contact with a bottom surface of a groove formed in a driving sheave of the hoist 28 is brought into contact with the bottom of the U-shaped magnetic sensor 11.

The reason for setting the above direction and position of the probe part 30 relative to the measured rope 1 is as follows: In general, the wire rope 1 is most severely damaged by the driving sheave of the hoist 28. By setting the direction and position of the probe part 30 as mentioned above, it is possible to securely detect a flaw portion of the wire rope 1 passing round the hoist 28.

In Figs. 5 and 6, the measured wire rope 1 is scanned, and signals are gathered, after the elevator is activated for an inspection operation, for example. Since the flaw detection apparatus for a wire rope of an elevator according to the present invention can be held in the elevator shaft in the manner shown in the drawings, an operator can detect a flaw portion outside the elevator shaft, which contributes, in particular, an improvement of the safety of a machineroom-less elevator.

As shown in Fig. 6, the probe part 30 may be secured on the elevator car 26 by the securing means 30a. By securing the probe part 30 on the elevator car 26, a power can be supplied from the elevator car 26 to the probe part 30. In addition, since an operator can secure the probe part 30 on the elevator car 26 located at any position, a labor required for installing the apparatus can be saved.

## Claims

1. A flaw detection apparatus for a wire rope of an elevator for detecting a flaw portion of a wire rope of an elevator having a nominal diameter of 4mm to 8mm, comprising:
a plurality of flaw detectors disposed near the wire rope; wherein
each of the flaw detectors has a first and a second magnetic poles of different polarity, and a magnetic sensor of a U-shape disposed between the first and second magnetic poles,
each of the U-shaped magnetic sensors has a bottom radius in the range of 2mm to 5mm, a difference between the bottom radius of the magnetic sensor and a half of the nominal diameter of the wire rope being equal to or less than 1.5mm, and
a distance between sidewalls of the U-shaped magnetic sensors of the adjacent flaw detectors in a plan view is equal to or more than 2 mm.

2. The flaw detection apparatus for a wire rope of an elevator according to claim 1, wherein
the adjacent flaw detectors are staggered relative to a longitudinal direction of the wire rope.

3. The flaw detection apparatus for a wire rope of an elevator according to claim 1 or 2, further comprising:
a filter for filtering to eliminate noises other than signals showing a flaw of the wire rope from signals that are output from the magnetic sensors of the plurality of flaw detectors, wherein
after filtering the noises, all of the rest signals are summed up.

4. The flaw detection apparatus for a wire rope of an elevator according to claim 1 or 2, further comprising:
means for eliminating signals under a threshold value from signals that are output from the magnetic sensors of the plurality of flaw detectors, wherein
after eliminating the signals under the threshold value, all the rest signals are summed up.

5. The flaw detection apparatus for a wire rope of an elevator according to claim 1, further comprising:
securing members for holding and securing the respective flaw detectors on predetermined positions of an elevator shaft or a machineroom.

6. The flaw detection apparatus for a wire rope of an elevator according to claim 5, wherein
the securing members for holding the flaw detectors are disposed near a hoist.

7. The flaw detection apparatus for a wire rope of an elevator according to claim 6, wherein
the securing members hold the flaw detectors at positions where a side surface of the wire rope which is in contact with a groove of a driving sheave of the hoist and bottom surfaces of the magnetic sensors of the flaw detectors are opposed to each other.

8. The flaw detection apparatus for a wire rope of an elevator according to claim 1, further comprising:
securing members for holding and securing the flaw detectors on an elevator car.

9. The flaw detection apparatus for a wire rope of an elevator according to claim 1, comprising:
means for converting analogue signals, that are output from the magnetic sensors of the plurality of flaw detectors, to digital signals and storing the digital signals.

10. The flaw detection apparatus for a wire rope of an elevator according to claim 1, further comprising:
a device for displaying a sum of signals that are output from the magnetic sensors of the plurality of flaw detectors.

11. The flaw detection apparatus for a wire rope of an elevator according to claim 1, wherein
each of the U-shaped magnetic sensors covers at least a semi-circumference or more of the wire rope.
